# EUROPÄISCHE PATENTSCHRIFT

(11) **EP 2 160 053 B1**
(45) Veröffentlichungstag und Bekanntmachung des Hinweises auf die Patenterteilung: **07.10.2015**
(21) Anmeldenummer: 09010040.5
(22) Anmeldetag: 04.08.2009
(51) Int. Cl.: H04W 12/02, H04B 1/44, H04W 4/10, H04W 84/08, H04W 76/00

(54) **System und Verfahren zum Umschalten einer Übertragungsrichtung in einer Funkverbindung und Funkgerät**
System and method for switching a transfer direction in a radio connection and radio device
Système et procédé de commutation d'une direction de transmission dans une liaison radio et appareil radio

(30) Priorität: 28.08.2008 DE 102008044752
(43) Veröffentlichungstag der Anmeldung: 03.03.2010
(73) Patentinhaber: Rohde & Schwarz GmbH & Co. KG, 81671 München (DE)
(72) Erfinder: Beckert, Stefan, 81825 München (DE)
(74) Vertreter: Beder, Jens

(56) Entgegenhaltungen:
- EP-A1- 1 638 354
- EP-A2- 1 517 567
- JP-A- 2008 042 592
- US-A1- 2006 008 078
- US-A1- 2008 146 203

## Beschreibung

Die Erfindung betrifft ein System und Verfahren zum Umschalten einer Funkverbindung, sowie ein entsprechendes Funkgerät.

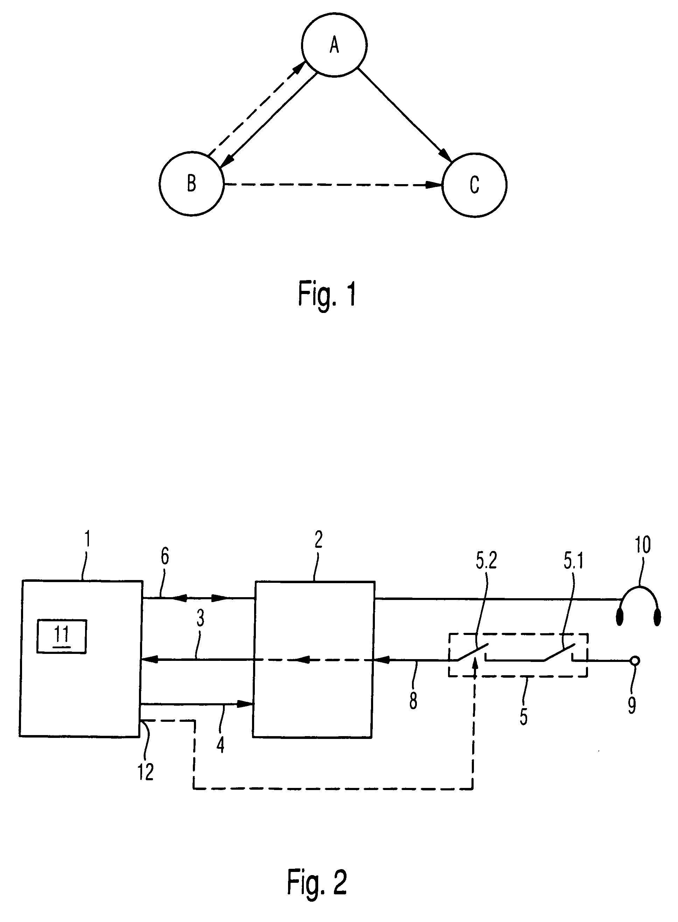

Viele Funkverbindungen zeichnen sich dadurch aus, dass zu jeweils einem Zeitpunkt nur in eine Richtung Daten übertragen werden können. Dabei drückt ein Funkteilnehmer z. B. eine Sprechtaste eines Funkgeräts oder gibt auf andere Weise eine Sendeanweisung und kann so Informationen auf einem verabredeten Sendekanal und Sendemodus übertragen. Im Falle mehrerer Gesprächsteilnehmer erfordert dies eine strenge Funkdisziplin. Fig. 1 zeigt den Funkverkehr von 3 Funkteilnehmern, wobei A sich im Sendemodus befindet und Informationen, gekennzeichnet durch die durchgezogenen Pfeile, an B und C überträgt. Will nun B aufgrund eines wichtigen Ereignisses A unterbrechen und eine Mitteilung an A und C senden, so gibt B seinerseits eine Sendeanweisung und beginnt seine Informationen gekennzeichnet durch gestrichelte Pfeile an A und C zu übermitteln. Wenn Funkteilnehmer C die Informationen von B empfängt, wird der Empfang von A unterbrochen und der Empfang von B gestartet, da das Unterbrechen von A eine wichtige Mitteilung vermuten lässt, wobei C zu diesem Zeitpunkt ohnehin im Empfangsmodus ist. Dieser Vorgang wird auch als Receiver Break-In bezeichnet. Dagegen muss das Funkgerät von A bei einem Empfang der Informationen von B von dem Sendemodus in den Empfangsmodus wechseln, um die Informationen von B zu empfangen. Dieser Vorgang wird auch als Transmitter Break-In bezeichnet.

Zur Wahrung der Integrität der Informationsübertragung der Funkteilnehmer werden die übertragenen Daten oft verschlüsselt, um das Abhören vertraulicher Information durch nicht autorisierte Dritte zu verhindern. Dies wird oft durch eine externe (oder auch ins Funkgerät integrierte) Verschlüsselungsvorrichtung, die zwischen dem Benutzer und dem Funkgerät bzw. im Falle der Integration der Funkeinrichtung angeordnet wird, realisiert. So lassen sich durch das Zwischenschalten der Verschlüsselungsvorrichtung bei allen zugelassenen Funkteilnehmern die zu sendenden Daten z. B. verschlüsseln und nach dem Empfang wieder entschlüsseln. Bei einer Änderung der Verschlüsselungsalgorithmen muss so nicht das ganze Funkgerät ausgetauscht werden, sondern nur die Verschlüsselungsvorrichtung. Die Sendeanweisung, z.B. durch das Drücken der Sendetaste oder Betätigen einer vergleichbaren Einrichtung z. B. bei Verwendung eines Headsets, wird dabei über die Verschlüsselungsvorrichtung an das Funkgerät bzw. die Funkeinrichtung übermittelt, welches daraufhin ein Antwortsignal an die Verschlüsselungsvorrichtung zurückgibt, welches die Sendebereitschaft des Funkgeräts beschreibt. Daraufhin gibt die Verschlüsselungsvorrichtung die vom Benutzer oder auf Basis einer Benutzereingabe erzeugten Nutzdaten, z. B. Sprachdaten, als verschlüsselte Daten an das Funkgerät weiter, welche diese als Funksignal an die anderen Funkteilnehmer sendet. Solche verschlüsselten in jeweils einem Zeitpunkt unidirektionalen Funkverbindungen sind z.B. im Flugfunk, im Polizeifunk oder bei Spezialeinheiten im Einsatz, um einfache und leichte Funkgeräte bei gleichzeitig höchster Integritätswahrung zu gewährleisten. Nachfolgend wird von einem Funkgerät mit damit verbundenem Verschlüsselungsgerät ausgegangen. Es ist jedoch ersichtlich, dass die vorliegende Erfindung nicht hierauf beschränkt ist.

Will nun wieder B eine wichtige Mitteilung an die anderen Funkteilnehmer A und C funken, während A sich im Sendemodus befindet und Informationen übermittelt, müsste A wieder in den Empfangsmodus wechseln. Das Funkgerät von A empfängt zwar den Transmitter Break-In, aber das Funkgerät von A kann nicht einfach in den Empfangsmodus wechseln, da die Verschlüsselungsvorrichtung noch im sendenden Verschlüsselmodus ist. Der Funkteilnehmer A kann erst nach der Aufhebung der Sendeanweisung, z.B. durch Loslassen der Sendetaste, die Informationen von B entschlüsseln. Dadurch kann aber bereits der Anfang der Mitteilung, der eventuell sehr wichtig ist, verloren gehen. Ein sofortiges Aufheben der Sendeanweisung nach dem Transmitter Break-In durch die Verschlüsselungsvorrichtung wäre also notwendig, um die Verschlüsselungsvorrichtung und das Funkgerät ordnungsgemäß in den Entschlüsselungs- und Empfangsmodus zu versetzen. Dies würde eine weitere Funktion der Verschlüsselungsvorrichtung und eine zusätzliche Verbindung zu der bereits zum Senden belegten Verbindung zwischen dem Funkgerät und der Verschlüsselungsvorrichtung erfordern. Dies ist allerdings kostenintensiv und erfordert zusätzlich zu neuen Funkgeräten auch noch neue Verschlüsselungsvorrichtungen.

Dokument EP 1 517 567 offenbart eine Mobilstation zum Leiten von drahtlosen DMO-Kommunikationen (DMO= Direktbetriebsart) mit anderen drahtlosen Endgeräten, die, wenn sie an einem Anruf unter Verwendung eines DMO-Kanals mit einer oder mehreren anderen Mobilstationen teilnimmt, betreibbar ist, um eine Überwachung bezüglich einer Nachricht durchzuführen, die durch ein weiteres drahtloses Endgerät, das nicht an dem Anruf teilnimmt, an die Mobilstation gesendet wird, wobei die Mobilstation aufgefordert wird, an einem DMO-Anruf mit dem weiteren drahtlosen Endgerät teilzunehmen.

Das Dokument JP 2008/042592 offenbart ein Kommunikationsendgerät, umfassend einen Sender und einen Empfänger für Sprachdaten, welches einen Umschalter zwischen Sende- und Empfangsmodus aufweist.

Aufgabe der Erfindung ist es, die Probleme des Stands der Technik verschlüsselter Funkverbindungen effizient zu beheben und Funksysteme des Stands der Technik zu verbessern. Dabei ist es besonders wichtig, ein Verfahren zum schnellen und verlustlosen Wechsel, d. h. ohne Nutzdatenverlust, in den Empfangs- und Entschlüsselmodus im Falle eines Transmitter Break-Ins zu realisieren, welcher kostengünstig und effizient zu realisieren ist und ein entsprechendes System und Funkgerät zu schaffen.

Die Aufgabe der Erfindung wird durch das Verfahren nach Anspruch 1, das System nach Anspruch 7 und das Funkgerät nach Anspruch 11 gelöst. Nach dem Erzeugen einer Sendeanweisung durch einen Benutzer, welche über eine Verschlüsselungsvorrichtung an ein Funkgerät gegeben wird, werden durch den Benutzer erzeugte und durch die Verschlüsselungsvorrichtung verschlüsselte Daten über das Funkgerät gesendet. Wird nun ein Funksignal eines anderen jetzt gleichzeitig sendenden Funkgeräts empfangen, welches an das ursprünglich sendende Funkgerät gerichtet ist, so schaltet das Funkgerät automatisch aus dem Sende- in den Empfangsmodus und gibt eine Unterbrechungsanweisung aus. Die Bezeichnung "Funkgerät" bezieht sich dabei auch auf zur Erzeugung funkgerättypischer Funktionen verwendeter Komponenten bei integrierten Lösungen.

Durch die Ausgabe einer Unterbrechungsanweisung wird die Sendeanweisung des Benutzers automatisch, z.B. durch eine Unterbrechungsschaltung der Sprechtaste, aufgehoben oder unterbrochen und somit geht daraufhin die Verschlüsselungsvorrichtung in die Bereitschaft für den Entschlüsselungsmodus als ob der Benutzer die Sendeanweisung selbst aufgehoben hätte. Durch diese effiziente und kostengünstige Unterbrechung der Sendeanweisung werden keine zusätzlichen Funktionen oder Verbindungen an der Verschlüsselungsvorrichtung benötigt, da das ordnungsgemäße Beenden des Sende- und Verschlüsselungsmodus durch das Beenden der Sendeanweisung ausgenutzt wird. Die zwischenzeitlich von dem anderen Funkgerät ankommenden Daten werden durch das ursprünglich sendende Funkgerät ab Erkennen eines anderen sendenden Funkgeräts zwischengespeichert.

Die Unteransprüche betreffen vorteilhafte Weiterbildungen der Erfindung.

Besonders vorteilhaft ist es, in der während des Umschaltens der Verschlüsselungsvorrichtung vergangenen Zeit, d.h. zwischen dem Empfang des an das sendende Funkgerät gerichteten Signals und der Entschlüsselung der empfangenen Daten durch die Verschlüsselungsvorrichtung, das empfangene Funksignal zwischenzuspeichern und um die zwischengespeicherte Zeit verzögert auszugeben. Dies hat den Vorteil, dass selbst in der kurzen Umschaltzeit, keine der in dem empfangenen Funksignal enthaltenen Information verloren geht. Vorteilhaft kann dies durch eine maximale Zwischenspeicherzeit begrenzt werden, um auch bei längeren Umschaltvorgängen der Verschlüsselungsvorrichtung die Aktualität der Information zu erhalten.

Die Aufgabe der Erfindung wird auch durch ein System zum Funken von verschlüsselten Daten und ein entsprechendes Funkgerät gelöst. Dabei weist das System eine Anweisungsvorrichtung zum Erzeugen und Aufheben einer Sendeanweisung und eine Verschlüsselungsvorrichtung zum Verschlüsseln von Daten, falls eine Sendeanweisung vorliegt, und zum Entschlüsseln von Daten, falls keine Sendeanweisung vorliegt, auf. Das System weist weiterhin ein Funkgerät zum Senden der durch die Verschlüsselungsvorrichtung verschlüsselten Daten und zum Empfangen verschlüsselter Daten, die an die Verschlüsselungsvorrichtung gegeben werden, auf. Das Funkgerät ist über eine die Verschlüsselungsvorrichtung umgehende Verbindung mit der Vorrichtung zum Erzeugen einer Sendeanweisung verbunden, wobei im Falle eines an das Funkgerät gerichteten Signals während einer vorliegenden Sendeanweisung mittels dieser Verbindung eine Unterbrechungsanweisung zum Aufheben der Sendeanweisung an die Vorrichtung zum Erzeugen einer Sendeanweisung gegeben wird und das Funkgerät in den Empfangsmodus umgeschaltet wird. Das Funkgerät weist außerdem einen Speicher zum Zwischenspeichern von empfangenen Daten auf.

Das Ausführungsbeispiel wird nachfolgend anhand der Zeichnung ausführlich beschrieben. In der Zeichnung zeigt:
- Fig. 1: die Problematik der Kommunikation mehrerer Funkteilnehmer in einer Funkverbindung;
- Fig. 2: ein Ausführungsbeispiel des erfindungsgemäßen Funksystems; und
- Fig. 3: den zeitlichen Verlauf der in dem Ausführungsbeispiel auftretenden Signale.

Bei dem beschriebenen Ausführungsbeispiel kommunizieren 3 Personen A, B und C wie es in Fig. 1 dargestellt wurde.

Diese drei Teilnehmer A, B, C kommunizieren durch Funkübertragung z. B. von Audiodaten wie Sprache über eine verschlüsselte zu jedem einzelnen Zeitpunkt unidirektionale Funkverbindung, wobei die Übertragungsrichtung wechseln kann. Dazu benutzt jeder dieser drei Teilnehmer ein System, wie es in Fig. 2 abgebildet ist, aus einem Funkgerät 1, aus einem externen Verschlüsselungsgerät 2 als Verschlüsselungsvorrichtung und einer Sprechtaste 9, die über eine Verbindung, z. B. ein Kabel 8 mit dem Verschlüsselungsgerät 2 verbunden ist, als Anweisungsvorrichtung. Das Ausführungsbeispiel ist nicht beschränkend für die Erfindung. Vielmehr können anstatt der drei Personen auch beliebig viele Teilnehmer an der Kommunikation teilnehmen und anstatt Personen können sich auch automatisierte Funkteilnehmer an der Kommunikation beteiligen. Alternativ können auch andere Daten, wie Video- oder sonstige Nutzdaten, zusätzlich oder alleine übertragen werden. Auch das jeweils verwendete Funksystem ist nicht auf das beschriebene beschränkt, sondern kann den Anforderungen entsprechend angepasst werden. So können die Verschlüsselungsvorrichtung und das Funkgerät auch als Baugruppen in einem gemeinsamen Gerät integriert sein.

Das Verschlüsselungsgerät 2 verschlüsselt die vom Benutzer z.B. durch ein Mikrofon eines Headsets 10 erzeugten Sprachdaten und leitet diese im einfachsten Falle an das Funkgerät 1 weiter. In dem Ausführungsbeispiel wird zur zusätzlichen Erhöhung der Sicherheit der Übertragung in kurzen Zeitabständen zu exakt festgelegten Zeiten die Übertragungsfrequenz gewechselt. Dies wird als Frequenzhopping bezeichnet. Die benutzten Frequenzen und deren Benutzungsintervalle in der Zeit müssen den Funkgeräten 1 der Teilnehmer sowohl auf der Sende- als auch auf der Empfängerseite bekannt sein, um eine Kommunikation zu ermöglichen.

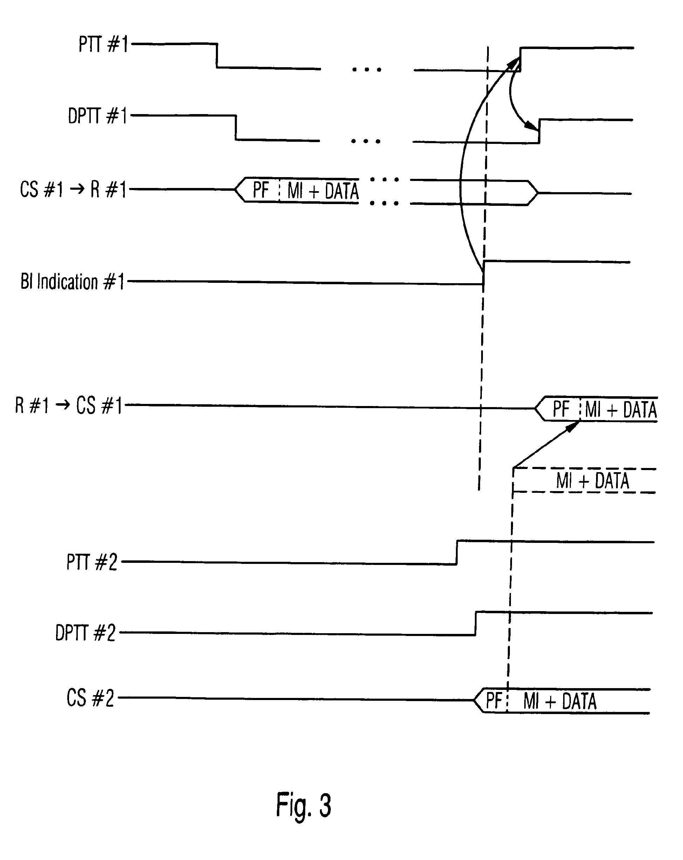

Die erfindungsgemäße Lösung wird anhand des Funksystems der Fig. 2 und deren Signale aus Fig. 3 des Ausführungsbeispiels beschrieben. Fig. 3 zeigt dabei den zeitlichen Verlauf von Signalen. Die Pfeile zeigen Folgen, die durch Änderungen gewisser Signalgrößen entstehen, auf weitere Signalgrößen. Zum Kommunizieren drückt eine mitteilende Person A die Sprechtaste 9 und schließt damit einen ersten von zwei Schaltern 5.1 und 5.2 einer Schaltvorrichtung 5. Der zweite, zwischen dem ersten Schalter 5.1 und dem Verschlüsselungsgerät 2 angeordnete Schalter 5.2 ist zunächst geschlossen (default-Einstellung). Der Teilnehmer erzeugt so eine Push-To-Talk (PTT) Anforderung als Sendeanweisung, die über das Kabel 8 an das Verschlüsselungsgerät 2 übermittelt wird. Das Verschlüsselungsgerät 2 leitet die PTT Anforderung über die Verbindung 3 an das Funkgerät 1 weiter. Daraufhin erzeugt der in dem Funkgerät 1 enthaltene EPM Prozessor (Electronically Protection Measurement Prozessor) nach erfolgtem Verbindungsaufbau ein sog. Delayed PTT (DPTT) Signal und gibt dieses über eine weitere Verbindung 4 an das Verschlüsselungsgerät 2 aus. Gleichzeitig geht das Funkgerät 1 in den Sendemodus. Nun weiß auch das Verschlüsselungsgerät 2 durch das DPTT Signal, dass das Funkgerät 1 sendebereit ist und kann nun die Daten, die der Benutzer durch Sprechen in das Mikrofon 10 erzeugt, verschlüsseln und über eine Datenverbindung 6 an das Funkgerät 1 geben. Die Verbindungen können in Form von Leiterbahnen auf Leiterplatten oder beispielsweise durch Kabel realisiert sein.

Die Fig. 3 zeigt schematisch den zeitlichen Verlauf der Datenströme und Signale. Systemkomponenten des Teilnehmers A werden ebenso wie dessen Signale mit dem Zusatz #1 gekennzeichnet. Entsprechend wird auf Geräte und Signale des zweiten Teilnehmers durch den Zusatz #2 Bezug genommen. Zunächst wird wie bereits erläutert durch Teilnehmer A, das PTT #1 Signal erzeugt, wie es bei Funkverbindungen bekannt ist. Dieses PTT #1 Signal wird über das Verschlüsselungsgerät 2 #1 an ein Funkgerät #1 weitergeleitet, welches nach einem festen Zeitschema ein DPTT #1 Signal zurückgibt. Mit Vorliegen des DPTT #1 Signals an dem Verschlüsselungsgerät 2 #1 kann das Verschlüsselungsgerät 2 #1 beginnen, Daten an das Funkgerät 1 #1 zu übermitteln. Dies ist in der Figur 3 mit CS #1 → R#1 dargestellt. Die von dem Verschlüsselungsgerät 2 #1 an das Funkgerät 1 #1 übermittelten Daten enthalten zunächst eine sogenannte "Phasing-Framing-Sequenz (PF)" gefolgt von einem "Message Identifier (MI)" sowie den Nutzdaten (DATA).

Bei dem beschriebenen System wird die Phasing-Framing-Sequenz (PF), welche durch das Verschlüsselungsgerät 2 #1 erzeugt wird jedoch nicht über die Luftschnittstelle zu den anderen Funkteilnehmern übertragen. Eine Übertragung von Daten über die Funkschnittstelle, welche durch die anderen Funkteilnehmer empfangen werden kann, beginnt erst mit der Übermittlung des sich an die Phasing-Framing-Sequenz anschließenden Datenteils (MI + DATA). Der bisher beschriebene Ablauf ist immer dann zutreffend, wenn aufgrund der herrschenden Funkdisziplin jeweils nur ein Teilnehmer eine Sprechtaste 9 betätigt und somit nur ein Funkgerät zu einem Zeitpunkt sendet.

Muss nun während des laufenden Sendebetriebs durch Funkgerät 1 #1 durch einen anderen Funkteilnehmer, nachfolgend Teilnehmer 2, eine wichtige Mitteilung gemacht werden, so wird an dem Verschlüsselungsgerät 2 (#2) durch dessen Benutzer ebenfalls eine Sprechtaste 9 #2 betätigt und in bereits beschriebener Weise ein PTT #2 Signal erzeugt. Dies ist in der Figur 3 in dem unteren Bereich der Zeichnung dargestellt. Wiederum aufgrund eines internen Zeitschemas wird daraufhin von dem Funkgerät des Teilnehmers #2 ein DPTT #2 Signal erzeugt und an sein zugeordnetes Verschlüsselungsgerät 2 #2 gegeben. Unabhängig vom Zustand der anderen Funkteilnehmer fängt nun das Funkgerät des Teilnehmers #2 an, die nach Erhalt des DPTT #2 Signals durch sein Verschlüsselungsgerät 2 #2 übermittelten Daten (MI + DATA) über die Luftschnittstelle zu übertragen. Dabei wird jeweils wiederum, wie es vorstehend in Bezug auf das Funkgerät 1 #1 erläutert wurde, nur der sich an die Phasing-Framing-Sequenz PF anschließende Teil der Datenübertragung gesendet.

Ab dem Vorliegen eines PTT #2 Signals wird durch das jeweilige Funkgerät 1 #2 bereits eine Information über die Luftschnittstelle gesendet, so dass die übrigen Funkteilnehmer, so auch Teilnehmer #1, das nun sendende Funkgerät 1 #2 als solches erkennen können. Daraufhin wird durch das Funkgerät 1 #1 des Teilnehmers 1 ein Unterbrechungssignal (nachfolgend "Break-In-Indication (BI)" #1 erzeugt. Dieses BI-Signal #1 wird über einen zusätzlichen Anschluss 12 des Funkgeräts 1 #1 ausgegeben. Das BI-Signal #1 wird an die Schaltvorrichtung 5 #1 übermittelt und öffnet dort einen zweiten Schalter 5.2 #1. Dadurch wird auch bei geschlossenem ersten Schalter 5.1 #1 das PTT #1 Signal zurückgesetzt.

Durch das Zurücksetzen des PTT #1 Signals wird ein regulärer Verbindungsabbau gewährleistet, der wie beim normalen Loslassen der Sprechtaste 9 #1 nach einer für den Verbindungsabbau erforderlichen Zeit zum Zurücksetzen des DPTT #1 Signals führt. Das Verschlüsselungsgerät 2 #1 des Teilnehmers #1 übermittelt daraufhin keine Daten mehr an das Funkgerät 1 #1 des Teilnehmers #1. Mit dem Erzeugen des Break-In-Signals #1 ist das Funkgerät 1 #1 des Teilnehmers #1 jedoch bereits empfangsbereit. Das Funkgerät 1 #1 hat erkannt, dass ein anderer Teilnehmer #2 nun sendet und speichert die ankommenden Daten in einem Speicher 11 #1 zwischen. Diese Zwischenspeicherung kann unmittelbar ab dem Ausgeben des BI-Signals #1 erfolgen. Es ist dagegen zu diesem Zeitpunkt noch nicht möglich, die verschlüsselt empfangenen Daten zu entschlüsseln, da das Verschlüsselungsgerät 2 #1 noch im Sendemodus ist. Hierzu muss erst der reguläre Verbindungsabbau von Funkgerät 1 #1 und Verschlüsselungsgerät 2 #1 erfolgen. Der Verbindungsabbau ist beim Zurücksetzen des DPTT #1 Signals abgeschlossen und nun ist das Verschlüsselungsgerät 2 #1 des Teilnehmers #1 bereit, die empfangenen, verschlüsselten Daten zu entschlüsseln und dem Benutzer in entschlüsselter Form z. B. via Headset 10 #1 zur Verfügung zu stellen. Aus dem Speicher 11 #1 des Funkgeräts 1 #1 werden daher die zwischengespeicherten, in der Fig. 3 gestrichelt dargestellten Daten, dem Entschlüsselungsgerät 2 #1 zugeführt. Zunächst wird allerdings nachdem das Verschlüsselungsgerät 2 #1 in den Entschlüsselungsmodus (Empfangsmodus) gewechselt hat durch das Funkgerät 1 #1 eine Phasing-Framing-Sequenz PF, die ja über die Luftschnittstelle nicht übertragen wird, erzeugt. Im Anschluss daran werden die tatsächlich über die Luftschnittstelle übermittelten Daten (MI + DATA) an das Verschlüsselungsgerät 2 #1 weitergeleitet (R #1 → CS #1). Dort werden sie entschlüsselt und schließlich an den Benutzer weitergeleitet.

Zur Zwischenspeicherung der über die Luftschnittstelle übertragenen Daten (MI + DATA) steht in jedem der Funkgeräte 1 nur ein begrenzter Speicher 11 zur Verfügung. Nachdem dieser Speicher 11 voll ist, erfolgt daher automatisch eine Ausgabe der Daten an das mit dem Funkgerät 1 verbundene Verschlüsselungsgerät 2. Dabei spielt es keine Rolle, ob der reguläre Verbindungsabbau bis zu diesem Zeitpunkt bereits erfolgt ist. Ist ein Verbindungsabbau noch nicht erfolgt und daher das Verschlüsselungsgerät 2 #1 noch nicht in der Lage Daten zu entschlüsseln, so ist der Anfang der von dem Funkgerät 1 #1 an das Verschlüsselungsgerät 2 #1 ausgegebenen Daten verloren. Da jedoch mit neu über die Luftschnittstelle ankommenden Daten der Speicher 11 #1 des Funkgeräts 1 #1 immer wieder überschrieben wird, muss die Ausgabe spätestens zu diesem Zeitpunkt erfolgen.

Mit dieser Maßnahme wird dem angeschlossenen Verschlüsselungsgerät die Möglichkeit eines sogenannten Re-syne Prozesses gegeben.

Hat der Teilnehmer #2 seine Nachricht beendet und hört auf zu senden (PTT #2 wird zurückgenommen), so wird auch das Break-In-Signal BI #1 des Teilnehmers #1 zurückgesetzt.

Dementsprechend wird der zweite Schalter 5.2 #1 wegen seiner Default-Einstellung wieder geschlossen. Ist der Teilnehmer #1 nach wie vor auf der Sprechtaste 9 #1, so ist auch der erste Schalter 5.1 #1 geschlossen und sein System geht wieder in den Sendemodus über. Ist dagegen der erste Schalter 5.1 #1 offen, da der Benutzer die entsprechende Sprechtaste 9 #1 losgelassen hat, so ist sein System wie im normalen Funkbetrieb wieder bereit.

Die Erfindung ist nicht auf das dargestellte Ausführungsbeispiel beschränkt. Einzelne Merkmale der Erfindung sind in vorteilhafter Weise kombinierbar und insbesondere ist der dargestellte Sprechfunk nur beispielhaft.

## Patentansprüche

1. Ein Verfahren zum Umschalten einer Übertragungsrichtung in einem Funksystem mit einer Verschlüsselungsvorrichtung (2) die folgenden Schritte aufweisend:
- Erkennen einer Sendeanweisung (PTT #2) auf Basis einer Benutzervorgabe, welche über eine Verschlüsselungsvorrichtung (2) an ein Funkgerät (1) weitergegeben wird;
- Senden von auf Basis einer Benutzereingabe erzeugten und durch die Verschlüsselungsvorrichtung (2) verschlüsselten Daten (MI + DATA) durch das Funkgerät;
- Empfangen eines an das sendende Funkgerät (1) gerichteten Funksignals mit verschlüsselten Daten ;
- Umschalten des Funkgeräts (1) aus dem Sende- in den Empfangsmodus und Ausgeben einer Unterbrechungsanweisung (BI #1) durch das Funkgerät, wobei die Ausgabe der Unterbrechungsanweisung (BI #1) über eine zusätzliche Schnittstelle des Funkgeräts (1) erfolgt, wobei diese Ausgabe dann weiterhin über eine die Verschlüsselungsvorrichtung (2) umgehende Verbindung erfolgt und schließlich die Verschlüsselungsvorrichtung (2)nur durch die Unterbrechungsanweisung(BI #1), welche die Sendeanweisung (PTT #2) zurücksetzt, umschalten kann.

2. Verfahren nach Anspruch 1,
**dadurch gekennzeichnet,**
**dass** die Verschlüsselungsvorrichtung (2) nach dem Unterbrechen der Sendeanweisung (PTT) von einem Verschlüsselungs- in den Entschlüsselungsmodus umschaltet.

3. Verfahren nach Anspruch 1 oder 2,
**dadurch gekennzeichnet,**
**dass** die Verschlüsselungsvorrichtung (2) das Funkgerät (1) über das Ende der Sendeanweisung informiert und das Funkgerät (1) daraufhin die verschlüsselten Daten des empfangenen Funksignals an die Verschlüsselungsvorrichtung (2) ausgibt.

4. Verfahren nach einem der Ansprüche 1 bis 3,
**dadurch gekennzeichnet,**
**dass** die verschlüsselten Daten des empfangenen Funksignals für eine Umschaltzeit zwischengespeichert werden und um diese Umschaltzeit verzögert von dem Funkgerät (1) an die Verschlüsselungsvorrichtung (2) ausgegeben werden.

5. Verfahren nach Anspruch 4,
**dadurch gekennzeichnet,**
**dass** die Umschaltzeit die Zeit darstellt, bis die Verschlüsselungsvorrichtung (2) in den Entschlüsselungsmodus wechselt oder eine maximal hierfür erlaubte Zeit darstellt.

6. Verfahren nach einem der Ansprüche 1 bis 5,
**dadurch gekennzeichnet,**
**dass** die Unterbrechungsanweisung über eine zu der mit den zu sendenden Daten belegten zusätzlichen Schnittstelle des Funkgeräts (1) ausgegeben wird.

7. System zum drahtlosen Übertragen von verschlüsselten Daten aufweisend
- eine Vorrichtung (8, 9) zum Erzeugen und Aufheben einer Sendeanweisung ;
- eine Verschlüsselungsvorrichtung (2) zum Verschlüsseln von Daten, falls eine Sendeanweisung vorliegt, und zum Entschlüsseln von Daten andererseits;
- eine Funkeinrichtung (1) zum Senden von von der Verschlüsselungsvorrichtung (2) empfangenen, verschlüsselten Daten und zum Empfangen von Funksignalen, die an die Verschlüsselungsvorrichtung (2) gegeben werden,
**dadurch gekennzeichnet,**
**dass** die Funkeinrichtung (1) über eine, die Verschlüsselungsvorrichtung (2) umgehende Verbindung (6) mit der Vorrichtung (8, 9) verbunden ist, wobei im Falle eines an die Funkeinrichtung (1) gerichteten Funksignals während einer vorliegenden Sendeanweisung mittels der Verbindung (6) eine Unterbrechungsanweisung zum Aufheben der Sendeanweisung an die Anweisungsvorrichtung (8, 9) übertragbar ist und die Funkeinrichtung (1) in den Empfangsmodus umschaltbar ist.

8. System nach Anspruch 7,
**dadurch gekennzeichnet,**
**dass** die Funkeinrichtung (1) einen Speicher (11) zum Zwischenspeichern der mit dem Funksignal empfangenen verschlüsselten Daten bis zum Aufheben der Sendeanweisung und bis die Verschlüsselungsvorrichtung (2) im Entschlüsselungsmodus ist, aufweist.

9. System nach Anspruch 8,
**dadurch gekennzeichnet,**
**dass** durch die Funkeinrichtung (1) die zwischengespeicherten Daten relativ zu deren Empfang zeitverzögert an die Verschlüsselungsvorrichtung (2) ausgebbar sind, so dass die Verschlüsselungsvorrichtung (2) sich bei Erhalt der zeitverzögert übermittelten Daten im Entschlüsselungsmodus befindet.

10. System nach Anspruch 9,
**dadurch gekennzeichnet,**
**dass** bei einem Überschreiten einer maximalen Zeit, die zwischengespeicherten Daten an die Verschlüsselungsvorrichtung (2) ausgegeben werden.

11. Funkgerät, welches eine Sendeanweisung auf der Basis einer Benutzervorgabe über ein Verschlüsselungsgerät (2) erhält, aufweisend:
- eine Vorrichtung zum Senden von Funksignalen, falls eine Sendeanweisung auf der Basis einer Benutzervorgabe vorliegt, oder zum Empfangen von Funksignalen andernfalls;
- einen ersten Ein-/Ausgang (3) zum Empfangen von zu sendenden Daten von dem Verschlüsselungsgerät (2) oder zum Senden von empfangenen Daten an das Verschlüsselungsgerät (2) ;
**dadurch gekennzeichnet,**
**dass** das Funkgerät einen zweiten Ausgang (6) zur Ausgabe einer Unterbrechungsanweisung aufweist, wobei das Funkgerät (1), falls ein an das Funkgerät (1) gerichtetes Funksignal empfangen wird, die Unterbrechungsanweisung über den zweiten Ausgang (6) ausgibt und auf Empfang des Signals umschaltet, wobei die Ausgabe der Unterbrechungsanweisung über eine das Verschlüsselungsgerät (2) umgehende Verbindung erfolgt und das Verschlüsselungsgerät (2) nur durch die Unterbrechungsanweisung, welche die Sendeanweisung zurücksetzt, umschalten kann.

12. Funkgerät nach Anspruch 11,
**dadurch gekennzeichnet,**
**dass** das Funkgerät (1) einen Speicher (11) zum Zwischenspeichern der nach dem Umschalten in den Empfangsmodus empfangenen Daten aufweist.

13. Funkgerät nach Anspruch 12,
**dadurch gekennzeichnet,**
**dass** der Speicher (11) die empfangenen Daten bis zur Aufhebung der Sendeanweisung und/oder für eine maximale Zwischenspeicherzeit zwischenspeichert.

## Claims

1. Method for changing over a transmission direction in a radio system having an encryption apparatus (2), said method having the following steps:
- a transmission instruction (PTT #2) is detected on the basis of a user specification which is forwarded to a radio unit (1) via an encryption apparatus (2);
- the radio unit transmits data (MI + DATA) generated on the basis of a user input and encrypted by the encryption apparatus (2);
- a radio signal which is addressed to the transmitting radio unit (1) and contains encrypted data is received;
- the radio unit (1) is changed over from the transmission mode to the reception mode and the radio unit outputs an interrupt instruction (BI #1), the interrupt instruction (BI #1) being output via an additional interface of the radio unit (1), this output then also being made via a connection that circumvents the encryption apparatus (2), and finally the encryption apparatus (2) being able to change over only as a result of the interrupt instruction (BI #1) which resets the transmission instruction (PTT #2).

2. Method according to Claim 1,
**characterized in that**
the encryption apparatus (2) changes over from an encryption mode to the decryption mode after the transmission instruction (PTT) has been interrupted.

3. Method according to Claim 1 or 2,
**characterized in that**
the encryption apparatus (2) informs the radio unit (1) of the end of the transmission instruction and the radio unit (1) then outputs the encrypted data in the received radio signal to the encryption apparatus (2).

4. Method according to one of Claims 1 to 3,
**characterized in that**
the encrypted data in the received radio signal are buffered for a changeover time and are output to the encryption apparatus (2) by the radio unit (1) in a manner delayed by this changeover time.

5. Method according to Claim 4,
**characterized in that**
the changeover time is the time until the encryption apparatus (2) changes to the decryption mode or a maximum time allowed for this purpose.

6. Method according to one of Claims 1 to 5,
**characterized in that**
the interrupt instruction is output via an interface of the radio unit (1) which is additional to the interface occupied by the data to be transmitted.

7. System for wirelessly transmitting encrypted data, having
- an apparatus (8, 9) for generating and cancelling a transmission instruction;
- an encryption apparatus (2) for encrypting data if a transmission instruction is present and for decrypting data otherwise;
- a radio device (1) for transmitting encrypted data received from the encryption apparatus (2) and for receiving radio signals passed to the encryption apparatus (2),
**characterized in that**
the radio device (1) is connected to the apparatus (8, 9) via a connection (6) which circumvents the encryption apparatus (2), wherein, in the case of a radio signal addressed to the radio device (1) during an existing transmission instruction, an interrupt instruction for cancelling the transmission instruction can be transmitted to the instruction apparatus (8, 9) by means of the connection (6) and the radio device (1) can be changed over to the reception mode.

8. System according to Claim 7,
**characterized in that**
the radio device (1) has a memory (11) for buffering the encrypted data received with the radio signal until the transmission instruction is cancelled and until the encryption apparatus (2) is in the decryption mode.

9. System according to Claim 8,
**characterized in that**
the radio device (1) can output the buffered data to the encryption apparatus (2) with a time delay relative to their reception, with the result that the encryption apparatus (2) is in the decryption mode when the data transmitted with a time delay are received.

10. System according to Claim 9,
**characterized in that**
the buffered data are output to the encryption apparatus (2) if a maximum time is exceeded.

11. Radio unit which receives a transmission instruction on the basis of a user specification via an encryption unit (2), having:
- an apparatus for transmitting radio signals if a transmission instruction on the basis of a user specification is present or for receiving radio signals otherwise;
- a first input/output (3) for receiving data to be transmitted from the encryption unit (2) or for transmitting received data to the encryption unit (2);
**characterized in that**
the radio unit has a second output (6) for outputting an interrupt instruction, the radio unit (1) outputting the interrupt instruction via the second output (6) if a radio signal addressed to the radio unit (1) is received and changing over to reception of the signal, the interrupt instruction being output via a connection which circumvents the encryption unit (2) and the encryption unit (2) being able to change over only as a result of the interrupt instruction which resets the transmission instruction.

12. Radio unit according to Claim 11,
**characterized in that**
the radio unit (1) has a memory (11) for buffering the data received after changing over to the reception mode.

13. Radio unit according to Claim 12,
**characterized in that**
the memory (11) buffers the received data until the transmission instruction is cancelled and/or for a maximum buffer time.

## Revendications

1. Procédé de commutation d'une direction de transmission dans un système radio comportant un dispositif de cryptage (2) présentant les étapes suivantes :
- la reconnaissance d'une consigne d'émission (PTT #2) en fonction d'une indication d'utilisateur, qui est transmise par l'intermédiaire d'un dispositif de cryptage (2) à un appareil radio (1) ;
- l'envoi de données (MI + DATA) générées en fonction de la saisie d'un utilisateur et cryptées par le dispositif de cryptage (2) par l'appareil radio ;
- la réception d'un signal radio orienté vers l'appareil radio émetteur (1) des données cryptées ;
- la commutation de l'appareil radio (1) du mode envoi en mode réception et la délivrance d'une consigne d'interruption (BI #1) par l'appareil radio, dans lequel la délivrance de la consigne d'interruption (B1 #1) est effectuée par l'intermédiaire d'une interface supplémentaire de l'appareil radio (1), dans lequel cette délivrance est effectuée en outre par l'intermédiaire d'une liaison comprenant le dispositif de cryptage (2) et enfin le dispositif de cryptage (2) peut commuter uniquement grâce à la consigne d'interruption (B1 #1), qui réinitialise la consigne d'émission (PTT #2).

2. Procédé selon la revendication 1, **caractérisé en ce que**
le dispositif de cryptage (2) commute d'un mode de cryptage en un mode de décryptage après l'interruption de la consigne d'émission (PTT).

3. Procédé selon la revendication 1 ou 2, **caractérisé en ce que**
le dispositif de cryptage (2) informe l'appareil radio (1) de la fin de la consigne d'émission et l'appareil radio (1) délivre ensuite les données cryptées du signal radio reçu au dispositif de cryptage (2).

4. Procédé selon l'une des revendications 1 à 3, **caractérisé en ce que**
les données cryptées du signal radio reçu sont mémorisées pour un temps de commutation et sont délivrées retardées de ce temps de commutation par l'appareil radio (1) au dispositif de cryptage (2).

5. Procédé selon la revendication 4, **caractérisé en ce que**
le temps de commutation représente le temps, jusqu'à ce que le dispositif de cryptage (2) passe en mode décryptage ou représente un temps maximal autorisé à cet effet.

6. Procédé selon l'une des revendications 1 à 5, **caractérisé en ce que**
la consigne d'interruption est délivrée par l'intermédiaire d'une interface supplémentaire occupée avec les données à envoyer de l'appareil radio (1).

7. Système pour une transmission sans fil de données cryptées comportant
- un dispositif (8, 9) pour générer et annuler une consigne d'envoi ;
- un dispositif de cryptage (2) pour crypter des données, si une consigne d'émission existe, et pour décrypter les données d'autre part ;
- une installation radio (1) pour envoyer des données cryptées reçues par le dispositif de cryptage (2) et pour recevoir des signaux radio, qui sont délivrés au dispositif de cryptage (2), **caractérisé en ce que**
l'installation radio (1) est reliée au dispositif (8, 9) par l'intermédiaire d'une liaison (6) comportant le dispositif de cryptage (2), dans laquelle, dans le cas d'un signal radio dirigé vers une installation radio (1), une consigne d'interruption pour annuler la consigne d'émission peut être transmise au dispositif de consigne (8, 9) au moyen de la liaison (6) pendant une consigne d'émission présente et l'installation radio (1) peut être commutée en mode réception.

8. Système selon la revendication 7, **caractérisé en ce que**
l'installation radio (1) présente une mémoire (11) pour mémoriser les données cryptées reçues avec le signal radio jusqu'à l'annulation de la consigne d'émission et jusqu'à ce que le dispositif de cryptage (2) passe en mode décryptage.

9. Système selon la revendication 8, **caractérisé en ce que**
les données mémorisées ayant trait à leur réception peuvent être délivrées retardées au dispositif de cryptage (2) par l'installation radio (1), de sorte que le dispositif de cryptage (2) se trouve en mode décryptage lors de la réception des données transmises retardées.

10. Système selon la revendication 9, **caractérisé en ce que**
les données mémorisées sont délivrées au dispositif de décryptage (2) dans le cas du dépassement d'un temps maximal.

11. Appareil radio, qui contient une consigne d'émission en fonction d'une indication d'utilisateur par l'intermédiaire d'un appareil de décryptage (2), comportant:
- un dispositif pour envoyer des signaux radio, si une consigne d'émission existe en fonction d'une indication d'utilisateur, ou autrement pour recevoir des signaux radio ;
- une première entrée/sortie (3) pour recevoir des données à envoyer par l'appareil de cryptage (2) ou pour envoyer des données reçues à l'appareil de cryptage (2) ;
**caractérisé en ce que**
l'appareil radio présente une seconde sortie (6) pour délivrer une consigne d'interruption, dans lequel l'appareil radio (1), au cas où un signal radio dirigé vers l'appareil radio (1) est reçu, délivre la consigne d'interruption à la seconde sortie (6) et commute à la réception du signal, dans lequel la délivrance de la consigne d'interruption est effectuée par l'intermédiaire d'une liaison comprenant l'appareil de cryptage (2) et l'appareil de cryptage (2) peut commuter uniquement grâce à la consigne d'interruption, qui réinitialise la consigne d'émission.

12. Appareil radio selon la revendication 11, **caractérisé en ce que**
l'appareil radio (1) comporte une mémoire (11) pour mémoriser les données reçues après la commutation en mode réception.

13. Appareil radio selon la revendication 12, **caractérisé en ce que** la mémoire (11) mémorise les données reçues jusqu'à l'annulation de la limite de la consigne d'émission et/ou pour un temps de mémorisation maximal.
